# EUROPEAN PATENT SPECIFICATION

(11) **EP 1 976 043 B1**
(45) Date of publication and mention of the grant of the patent: **10.03.2010**
(21) Application number: 07706395.6
(22) Date of filing: 05.01.2007
(51) Int. Cl.: H01M 2/02, H01M 2/06, H01M 2/30

(54) **ELECTRICAL PART, NONAQUEOUS-ELECTROLYTE CELL AND LEAD CONDUCTOR WITH INSULATING COATING LAYER AND SEALED BAG-LIKE BODY**
ELEKTRISCHES TEIL, NICHT WÄSSRIGE ELEKTROLYTZELLE UND ELEKTRISCHER LEITER MIT ISOLIERENDER DECKSCHICHT UND VERSIEGELTEM GEFÄSS
PIECE ELECTRIQUE, CELLULE D'ELECTROLYTE NON AQUEUSE ET CONDUCTEUR DE FIL RECOUVERT PAR UNE COUCHE ISOLANTE ET RESERVOIR SCELLE

(30) Priority: 10.01.2006 JP 2006002432
(43) Date of publication of application: 01.10.2008
(73) Proprietor: Sumitomo Electric Industries, Ltd., Osaka-shi, Osaka 541-0041 (JP)
(72) Inventor: FUKUDA, Yutaka, Osaka-shi Osaka 5540024 (JP)
(74) Representative: Cross, Rupert Edward Blount
(86) International application number: PCT/JP2007/050048
(87) International publication number: WO 2007/080836

(56) References cited:
- JP-A- 4 149 957
- JP-A- 2000 268 787
- JP-A- 2004 235 842
- JP-B2- 3 596 420
- US-A1- 2002 164 525
- US-A1- 2004 229 120

## Description

### Technical Field

The present invention relates to an electrical part used in electronic equipment and the like, and more particularly to a nonaqueous electrolyte cell used as a power supply of small electronic equipment and the like. The invention also relates to a lead conductor having an insulating coating and a bag-like body, which are constituent elements of the electrical part.

### Background Art

In accordance with tendency toward miniaturization of electronic equipment, there has been demand for miniaturizing and lightening electrical parts which are used in the electronic equipment. Therefore, in the case of a power supply, for example, there is a trend of adopting a nonaqueous electrolyte cell which is made using a sealed bag-like body and enclosing a nonaqueous electrolyte, a cathode, and an anode therein.

Such sealed bag-like body is required to have properties capable of preventing not only the permeation of electrolyte and gas but also the penetration of moisture from the outside. Therefore, the material generally used for the sealed bag-like body is a laminate film having a multilayer structure composed of resin film/ metal layer/ thermal adhesive resin (thermal adhesive layer).

The nonaqueous electrolyte cell can be made in the following manner: a nonaqueous electrolyte, a positive electrode plate, a negative electrode plate, and a separator between the positive and negative electrode plates are enclosed in the sealed bag-like body; and moreover lead conductors with one end respectively connected to the positive electrode plate and the negative electrode plate are arranged so as to extend from the opening portion of the sealed bag-like body to the outside of the cell; and lastly the opening portion is sealed by fusion-bonding. (Hereinafter, the opening portion that is to be heat-sealed is called a sealing portion.)

In the case of heat-sealing of the sealing portion, the thermal adhesive layers of the laminate film are fusion-bonded together, and the lead conductor and the laminate film are also fusion-bonded through the thermal adhesive layer. Therefore, the sealing portion is required to have not only excellent adhesion and sealing properties by fusion-bonding but also properties of not causing a short circuit between the lead conductor and the metal layer of the laminate film as a result of deformation during the heat-sealing.

Therefore, various contrivances have been done with respect to an inner layer (the layer which is to become a layer between the metal layer and the lead conductor at the sealing portion) of the laminate film or the insulating coating layer of the lead conductor located at the sealing portion. For example, Patent document 1 discloses an invention in which a layer of maleic acid modified polyolefin having good adhesion with the lead conductor is provided as an insulating coating layer on the lead conductor and further a layer of cross-linked polyethylene having a gel percentage of 20 to 90 % is provided outside the insulating coating layer. However, the problem of the invention is that the productivity decreases because of the control that must be done for securing adhesion by correctly controlling the degree of cross-hnking of the cross-linked polyethylene because the adhesion property varies depending on the degree of the cross-linking.

Another invention is disclosed in which heat-sealing is enabled at low temperature and the sealing effect is improved by interposing acid-modified linear low-density polyethylene between a lead conductor and a sealed bag-like body (Patent document 2). However, the problem of this invention is that it would be rather difficult to achieve heat-sealing by controlling the application of pressure and heat at the time of heat-sealing so as to avoid the short circuit that might easily occur as a result of softening and flowing of the interposed film.

Also disclosed is an invention in which prevention of a short circuit between a lead conductor and the metal layer of a laminate film is attempted by interposing, between the lead conductor and the sealed vessel, a film made by laminating a high-fluidity polypropylene layer, which easily deforms due to heat and pressure applied at the time of heat-sealing, and a low-fluidity polypropylene layer, which does not so easily deforms (Patent document 3). However, with this invention, since the short circuit is apt to occur at a temperature exceeding the melting point of the low-fluidity resin, it is rather difficult to achieve good adhesion by the heat-sealing performed under such conditions as to avoid the occurrence of short circuit.
[Patent document 1] Japanese Patent No. 3114174
[Patent document 2] Japanese Patent Application Publication No. 2001-297736
[Patent document 3] Japanese Patent Application Publication No. 2003-7269

### Disclosure of Invention

### Problems to be solved by the Invention

An object of the present invention is to solve the above-mentioned problems of the conventional techniques, and more specifically, to provide an electrical part, particularly a nonaqueous electrolyte cell, which comprises a lead conductor and a bag-like body which includes a metal layer and which is sealed at a sealing portion, the lead conductor extending from the inside of the bag-like body to the outside through the sealing portion, and in which the lead conductor and the sealed bag-like body are heat-sealed so as to have superior adhesive strength and sealing effect at the sealing portion, without causing any short circuit between the metal layer and the lead conductor at the time of heat-sealing. Another object of the present invention is to provide a sealed bag-like body and a lead conductor having an insulating coating layer, both of which are used in the electrical part.

### Means for solving the problems to be solved

As a result of investigations and study, the present inventor found that not only can superior sealing effect be obtained but also the short circuit problem can be solved if a thermal adhesive layer and a layer made of high softening temperature resin and having through holes made in the thickness direction are provided between a lead conductor and a metal layer of a sealed bag-like body at the sealing portion, that is, over the metal layer or the insulating coating layer of the lead conductor. Thus, based on such finding, the present invention was completed.

The present invention provides, as claim 1, an electrical part which comprises a lead conductor and a sealed bag-like body and which is sealed at a sealing portion, the lead conductor extending from the inside of the bag-like body to the outside through the sealing portion, wherein the lead conductor and the bag-like body are fusion-bonded through a thermal adhesive layer at the sealing portion, and wherein a softening-resistant layer having through holes made in the thickness direction is provided between the lead conductor and the metal layer at the sealing portion, material of said thermal adhesive layer penetrating through said through holes.

A typical example of the sealed bag-like body including a metal layer is a bag-like body consisting of a laminate film including a metal layer. For example, it is possible to use a bag-like body which is made of a laminate film such as the above-mentioned one having a multilayer structure comprising: a resin film/ a metal layer/ a thermal adhesive resin film (thermal adhesive layer), and the bag-like body can be manufactured by superposing two rectangular sheets of the laminate films and by heat-sealing the side portions of the laminate films except for an opening portion.

Here, the thermal adhesive layer, which is made of a thermal adhesive resin that can be melt for fusion-bonding, functions to fusion-bond the laminate films together and also the laminate film and the lead conductor together. Preferably, the metal layer is a foil made of aluminum or aluminum alloy, for example.

The lead conductor is made of metal and arranged to extend to the outside from the inside of the sealed bag-like body. For example, the lead conductor is an electric wire having a round or rectangular cross-section; however its sectional shape is not particularly limited to such a form. Examples of metal as a material for the lead conductor include aluminum, nickel, copper, nickel-plated copper, etc.

The lead conductor may be coated partly with an insulation layer, and particularly superior adhesive strength and sealing effect with the laminate film of the sealed bag-like body can be afforded to the insulation layer by providing the insulation layer with a thermal adhesive layer as its outer layer, at a portion corresponding to the sealing portion (the portion that is situated at the sealing portion when enclosed in the sealed bag-like body).

In the electrical part of the present invention, the lead conductor and the sealed bag-like body are fusion-bonded at the sealing portion through the thermal adhesive layer. This thermal adhesive layer is a thermal adhesive layer forming the above-mentioned laminate film or a thermal adhesive layer existing on the outer layer of the above-mentioned insulation layer formed at the portion corresponding to the sealing portion of the lead conductor, or the like.

In order to obtain excellent adhesive strength and sealing property at low heat sealable temperature, the thermal adhesive layer is formed of a resin whose softening temperature is low. Examples of resins having such low softening temperature include polyethylene, polypropylene, ionomer, and acid-modified polyolefin. Of these resins, acid-modified polyolefin is preferable because it has a polar group and hence excellent adhesion and sealing properties. The acid-modified polyolefin is polyolefin modified by grafting an acid such as maleic acid anhydride or the like. Examples of polyolefin relating to the acid-modified polyolefin resin are polyethylene and polypropylene.

The electrical part of the present invention is **characterized in that** a softening-resistant layer having through holes made in the thickness direction is provided between the lead conductor and the metal layer of the sealing portion. The softening-resistant layer is a layer made of a material whose softening temperature is sufficiently high so as not to cause deformation at the time of heat-sealing. The softening temperature of the material of the softening-resistant layer is preferably a high temperature that sufficiently exceeds the heat-sealing temperature. In such case, the softening-resistant layer does not deform at the time of heat-sealing, and accordingly the short circuit between the lead conductor and the metal layer of the sealed bag-like body can be prevented.

Thus, it is desirable that the softening temperature of the softening-resistant layer sufficiently exceed the heat-sealing temperature. Also, the softening temperature of the thermal adhesive layer is preferably a temperature sufficiently lower than the heat-sealing temperature: in many cases preferably 70 to 150 °C; however, from the viewpoint of workability in heat-sealing, the difference in the softening temperature between the softening-resistant layer and the thermal adhesive layer is preferably 20 °C or more, and more preferably 40 °C or more.

Examples of materials having high softening temperature that can be used for the softening-resistant layer include resins such as polyester, polyethylene, polypropylene, polyarylate, polyimide, polyamide, liquid crystal polymer, fluororesin, PPS, etc. Of these, preferable resins are polyester, polypropylene, polyarylate, and fluororesin. In addition to such resins, glass fibers may be used. Also, mixtures of two or more kinds of materials may be used.

The softening-resistant layer has through holes made in the thickness direction. At the time of heat-sealing, the resin forming a thermal adhesive layer is melt by heating and enters into the through holes. This causes a favorable result: that is, exfoliation between the thermal adhesive layer and the softening-resistant layer does not easily occur, and hence adhesion and sealing effect between the sealed bag-like body and the lead conductor is improved.

The through holes of the softening-resistant layer can be made by forming holes in the thickness direction with a drill, or the like. As described later, it is preferable to use a mesh made by knitting resin fibers or a nonwoven fabric made of resin fibers. The diameter of the through hole is preferably about 0.05 mm to 2 mm, and the porosity is preferably about 10% to 70 %. When the diameter of the through hole is smaller than 0.05 mm, it is difficult for a thermal adhesive layer to enter into the hole, resulting in a poor filling performance. In contrast, when it is greater than 2 mm, short-circuit tends to easily occur between the lead conductor and the metal layer.

The electrical part of the present invention can be obtained in the following manner: at the sealing portion of a sealed bag-like body, laminate films between which a lead conductor is sandwiched are heated so that the thermal adhesive layers existing in the laminate films and the insulating coating layer of the lead conductor are melt to be fusion-bonded together. Therefore, the heating is performed at a temperature above the fusion temperature of the resin of the thermal adhesive layer.

The present invention also provides, as claim 2, a nonaqueous electrolyte cell which comprises a bag-like body, which includes a metal layer and which is sealed at a sealing portion; a lead conductor extending to the outside from the inside the bag-like body; a nonaqueous electrolyte enclosed inside the sealed vessel; and an electrode enclosed inside the bag-like body and connected with an end of the lead conductor; wherein the lead conductor and the bag-like body are fusion-bonded through a thermal adhesive layer at the sealing portion, and wherein a softening-resistant layer having through holes made in the thickness direction is provided between the lead conductor and the metal layer at the sealing portion, material of said thermal adhesive layer penetrating through said through holes.

In this nonaqueous electrolyte cell, which is one embodiment of the electrical part of claim 1, the sealed bag-like body including a metal layer, the lead conductor, the thermal adhesive layer, and the softening-resistant layer are the same as those described above. Moreover, the nonaqueous electrolyte cell is **characterized in that** it has a nonaqueous electrolyte and an electrode connected with an end of the lead conductor in the sealed bag-like body. Because the electrode has at least an anode and a cathode, two or more lead conductors are provided, and one end of each lead conductor is connected with each electrode such as cathode, anode, or the like. The nonaqueous electrolyte, the cathode, and the anode are the same as those used in the known nonaqueous electrolyte cell in the past. Usually, a separator is provided for separating the cathode and the anode.

The present invention also provides a lead conductor having an insulating coating layer, the lead conductor being capable of use for the above-mentioned electrical part or the nonaqueous electrolyte cell of the present invention, wherein the insulating coating layer comprises a thermal adhesive layer and a softening-resistant layer and covers the lead conductor at a portion corresponding to the sealing portion. That is, the lead conductor having the insulating coating layer comprises an insulating coating layer covering the lead conductor at least at the portion corresponding to the sealing portion, and is
**characterized in that** the insulating coating layer has at least two layers, i.e., a thermal adhesive layer covering the lead conductor, and a softening-resistant layer having through holes made in the thickness direction and covering the thermal adhesive layer (claim 3).

The thermal adhesive layer, which is a constituent member of the lead conductor having an insulating coating layer of the present invention, has the same composition and characteristics as those of the above-mentioned thermal adhesive layer, and also the lead conductor and the softening-resistant layer have the same composition and characteristics as those of the above-mentioned lead conductor and the softening-resistant layer, respectively. The thermal adhesive layer is provided in contact with the lead conductor, and the softening-resistant layer is provided on the thermal adhesive layer 1. As a result, excellent adhesive strength between the lead conductor and the softening-resistant layer is obtained.

When the insulating coating layer consists of only two layers, i.e., the thermal adhesive layer and the softening-resistant layer, the softening-resistant layer and the laminate film of the sealed bag-like body are in contact and they are fusion-bonded together at the time of heat-sealing. A heat seal with the laminate film may be formed with the resin constituting the thermal adhesive layer such that it is melt by heating at the time of heat-sealing and enters into the through holes of the softening- resistant layer. In this case, it is more preferable that the heat seal be ensured by putting the resin of the thermal adhesive layer into the through holes beforehand in the process of manufacturing the lead conductor having an insulating coating layer.

The present invention provides, as a more preferable embodiment of the above-mentioned lead conductor having an insulating coating layer, a lead conductor having an insulating coating layer that is **characterized in that** the above-mentioned insulating coating layer further comprises a further thermal adhesive layer 2 for covering the softening-resistant layer (claim 4). Thus, it is more preferable to provide a thermal adhesive layer on the laminate film side of the softening-resistant layer, i.e. on the outer most circumferential periphery of the insulating coating layer so that more excellent adhesion with the sealed bag-like body and sealing effect may be obtained. The thermal adhesive layer 2 has the same composition and features as the above-mentioned thermal adhesive layer.

The resin of the first thermal adhesive layer and that of the further thermal adhesive layer 2 are fused by heating at the time of heat-sealing, entering into the through holes of the softening-resistant layer so as to touch each other through the through holes. As a result, the exfoliation of the softening-resistant layer and the thermal adhesive layers is restrained. In the case where the through holes of the softening-resiatant layer are filled with the resin of the thermal adhesive layers in the step of manufacturing the lead conductor having an insulating coating layer so that both resins of the thermal adhesive layers mutually contact, it is more preferable because their mutual contact becomes more assured.

The lead conductor having an insulating coating layer of the present invention can be obtained by providing the lead conductor with a coating layer using a known method. For example, the thermal adhesive layer can be formed by laminating a film-shaped resin. Also, the insulating coating layer consisting of three layers of a thermal adhesive layer/ a softening-resistant layer/ and a thermal adhesive layer can be obtained by laminating the film of these three layers around the lead conductor or other like method.

A mesh layer made by knitting resin fibers or a nonwoven fabric layer made of resin fibers can be used as the softening-resistant layer. Claim 5 corresponds to the embodiment in which the softening-resistant layer is a mesh layer, and claim 6 corresponds to the embodiment in which the softening-resistant layer is a nonwoven fabric layer.

For example, when the softening-resistant layer is a mesh layer, the warp may be polyester and the woof may be fluororesin. However, in many cases, from the viewpoint of cost for manufacturing a mesh or nonwoven fabric, it is preferable to use only one kind of resin. Moreover, in order to achieve good fusion-bonding of each yarn, an adhesive agent may be combined by several wt%, for example, in addition to the above-mentioned main resin materials.

Moreover, the present invention provides a sealed bag-like body which includes a metal layer and which is suitable for use in the above-mentioned electrical part or nonaqueous electrolyte cell of the present invention, wherein the sealed bag-like body has an insulation layer including a softening-resistant layer and a thermal adhesive layer at least at a part of the sealing portion (that is, at the position where the lead conductor is positioned in a sandwiched way at the time of heat sealing). That is, the sealed bag-like body including a metal layer is a sealed bag-like body suitable for use in the above-mentioned electrical part or nonaqueous electrolyte cell, and the sealed bag-like body is
**characterized in that** at least a portion to be fusion-bonded with the lead conductor is covered with an insulation layer having a thermal adhesive layer and a softening-resistant layer including through holes made in the thickness direction, and wherein the softening-resistant layer covers the thermal adhesive layer and the thermal adhesive layer covers the metal layer, whereby, on heat lamination of the layers, material of said thermal adhesive layer enters into said through holes (claim 7). Preferably, the softening-resistant layer is further covered with a thermal adhesive layer such that it is interposed between the two thermal adhesive layers (hereinafter, referred to as the thermal adhesive layer a and the thermal adhesive layer b, respectively).

In this sealed bag-like body, in which the thermal adhesive layer and the softening-resistant layer are provided, not on the lead conductor as in the case of the above-mentioned invention, but on the metal layer of the laminate film which constitutes the sealed bag-like body, excellent adhesion and sealing properties can be secured with the thermal adhesive layer, and furthermore the short circuit between the lead conductor and the metal layer of the sealed bag-like body can be prevented by means of the softening-resistant layer at the time of heat sealing.

The portion fusion-bonded with the lead conductor is a portion at which the sealed bag-like body (bag-like body) and the lead conductor are to be fusion-bonded together in a manner such that the lead conductor is sandwiched; therefore, the portion is on the inner side of the sealed bag-like body (the side for enclosing an electrolyte solution, etc.). The laminate film which constitutes the sealed bag-like body of the present invention is **characterized in that** it has an insulation layer on the inner face side of the metal layer, and the insulation layer comprises the thermal adhesive layer a and the softening-reaistant layer (preferably, further comprising the thermal adhesive layer b) at least at the portion fusion-bonded with the lead conductor. In order to facilitate the production of sealed bag-like bodies, the whole inner side face of the metal layer may be covered with the insulation layer of the above-mentioned composition.

The composition, effect, and function of the thermal adhesive layer a and the thermal adhesive layer b are the same as those of the above-mentioned thermal adhesive layer, and the composition, effect, and function of the softening-resistant layer are also the same as those of the above-mentioned softening-resistant layer. Moreover, the metal layer which constitutes the sealed bag-like body is also the same as the above-mentioned one, and preferably a foil made of aluminum or aluminum alloy may be used. The thermal adhesive layer a is provided touching the metal layer, and accordingly excellent adhesion between the metal layer and the softening-resistant layer can be achieved.

The laminate film which constitutes the sealed bag-like body of the present invention preferably has the thermal adhesive layer b on the lead conductor side (the side opposite to the metal layer) of the softening-resistant layer. Superior adhesion and sealing effect between the laminate film and the lead conductor can be obtained since the thermal adhesive layer b is fused by heating.

The resin of thermal adhesive layer a and the resin of the thermal adhesive layer b are fused by heating at the time of heat-sealing such that they enter into the through holes of the softening-resistant layer so as to mutually touch through the through holes. As a result, the exfoliation of the softening-resistant layer and each thermal adhesive layer is restrained. It is more preferable that the through holes of the softening-resistant layer are filled with the resins of the thermal adhesive layers at the step of manufacturing the laminate film of the sealed bag-like body such that the resins of the thermal adhesive layers mutually contact, allowing their contact to be more assured.

Also, the outside of the metal layer of the sealed bag-like body of the present invention, that is, the side opposite to the above-mentioned insulation layer, is usually provided with an insulation layer formed of resin or the like. Such resin may be polyamide or the like. Such laminate film can be made by a known method. For example, it can be made by a method in which a layer of resin such as polyamide is laminated on a metal layer and moreover a film consisting of three layers of thermal adhesive layer/ softening-resistant layer/ and thermal adhesive layer is laminated on the opposite side of the metal layer.

For the purpose of the softening-resistant layer that constitutes the insulation layer of the sealed bag-like body, a mesh layer made by knitting resin fibers or a nonwoven fabric layer made of resin fibers can also be used. Claim 8 corresponds to an embodiment in which the softening-resistant layer is a mesh layer, and claim 9 corresponds to the embodiment in which the softening-resistant layer is a nonwoven fabric layer. The compositions of the mesh layer and the nonwoven fabric layer are the same as those of the mesh layer and the nonwoven fabric layer which constitute the insulating coating layer of the lead conductor. For example, the warp may be polyester, and the woof may be fluororesin, and also, an adhesive agent may be combined by several wt% for achieving satisfactory fusion-bonding of each yarn.

### Advantageous Effect of the Invention

In the electrical part and the nonaqueous electrolyte cell of the present invention, and also, in the case where an electrical part or a nonaqueous electrolyte cell is manufactured using a sealed bag-like body and a lead conductor having an insulating coating layer according to the present invention, a softening-resistant layer made of resin whose softening temperature is higher than the fusion bonding temperature is put between the sealed bag-like body and the lead conductor, and therefore a short circuit, which otherwise might easily occur at the time of heat-sealing, between the lead conductor and the metal layer of the sealed bag-like body, can effectively be restrained. Moreover, the softening-resistant layer has through holes made in the thickness direction, allowing the resin of a thermal adhesive layer to enter into the through holes. Consequently, excellent adhesion strength and sealing effect can be obtained, and such a problem as exfoliation or the like does not occur.

### Brief Description of the Drawings

[Fig. 1] A schematic sectional view conceptionally showing a principal part of an insulating coating layer a of Examples.
[Fig. 2] A schematic sectional view conceptionally showing a thermoplastic resin sheet 1 of Examples.
[Fig. 3] A schematic sectional view showing the sealing portion and the vicinity thereof in a nonaqueous electrolyte cell of Examples.

### [Description of Referenced Numerals]

11, 13, 21, 23, 36, 36', 40, 40' maleic acid-modified polyethylene layer; 12, 22, 37, 41 softening-resistant layer; 12a, 22a, 30, 31 through holes; 28, 32 aluminum foil; 29, 39 polyamide layer; 33 lead conductor; 34 cathode; 35 anode; 38 laminate film

### Best Mode for Carrying out the Invention

Hereinafter, the best mode of embodiment of the present invention will be described on the basis of Examples. However, the present invention is not limited to the following embodiments of Examples. It will be possible to modify the following embodiments in various manners within the scope or equivalence of the present invention.

### Examples

### [Preparation of a lead conductor having an insulating coating layer for use in the evaluation test]

### (Preparation of a lead conductor)

The lead conductor for a cathode is an aluminum plate having a thickness of 0.1 mm, a width of 5 mm, and a length of 100 mm. The lead conductor for an anode is a copper plate having a thickness of 0.1 mm, a width of 5 mm, and a length of 100 mm.

### (Preparation of insulating coating layers)

The following four kinds (a, b, c, d) of insulating coating layers were prepared and they were each applied on the above-mentioned lead conductors respectively.

Insulating coating layer a:
The insulating coating layer a was prepared by superposing, in the enumerated order, a 50 µm thickness of maleic acid anhydride-modified polyethylene (Thermal adhesive layer 1: Admer NE060 made by Mitsui Chemicals, Inc., density 0.92g/cc, melt flow rate 1.0, softening temperature 104°C), a 25 µm thickness of polyester having through holes made in the thickness direction, the through holes having a diameter of 1 mm φ and a porosity of 28 % (Softening-resistant layer: Lumirror S10 made by Toray Industries, Inc., softening temperature 253 °C), and a 50 µm thickness of maleic acid anhydride-modified polyethylene (Thermal adhesive layer 2: Admer NE060 made by Mitsui Chemicals, Inc., density 0.92g/cc, melt flow rate 1.0, softening temperature 104°C), and moreover heat-laminating the superposed layers by a heating roller of 150 °C.

The softening temperature is a temperature measured according to JIS K7196 "the method of measuring a softening temperature according to thermo-mechanical analysis of a thermoplastic plastic film and sheet." This is the same in the case of the other insulating coating layers and thermoplastic resin sheets described below.

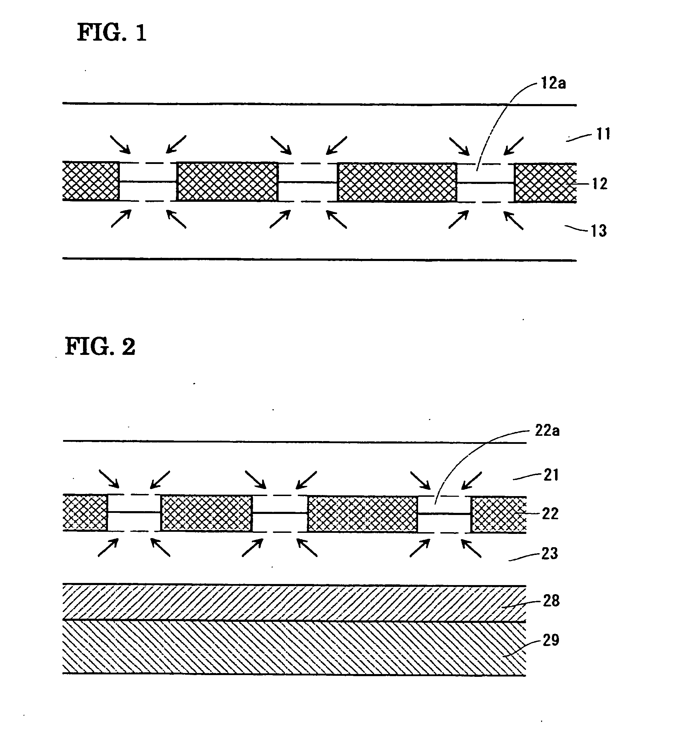

Figure 1 is a schematic sectional view conceptionally showing a principal part of an insulating coating layer a. In Fig. 1, numerals 11 and 13 each represent a maleic acid anhydride-modified polyethylene layer, and correspond to thermal adhesive layer 1 and thermal adhesive layer 2, respectively. Numeral 12 represents a softening-resistant layer made of polyester, and 12a represents a through hole thereof.

At the time of heat lamination, the pressure applied by the heating roller causes melt maleic acid anhydride-modified polyethylene to enter into through holes 12a from both of the upper and lower maleic acid anhydride-modified polyethylene layers 11 and 13 as indicated by arrowed lines, and the melt maleic acid anhydride-modified polyethylene that has reached from the layers is fusion-bonded together inside the through holes 12a.

Also, as a result of the through holes 12a being filled with the maleic acid anhydride-modified polyethylene, the contact area between the softening-resistant layer 12 and the maleic acid anhydride-modified polyethylene layers 11 and 13 increases and accordingly the adhesive strength between the softening-resistant layer 12 and the maleic acid anhydride-modified polyethylene layers 11 and 13 increases. That is, the adhesive strength increases between the layers constituting the insulating coating layer a.

Insulating coating layer b:
The insulating coating layer b was obtained in the same manner as the insulating coating layer a except that the 25 µm thickness of polyester having through holes made in the thickness direction was replaced by a 45 µm thickness of polyester mesh (softening-resistant layer: L315PW made by NBC Inc., wire diameter 30 µm, 315 meshes/ inch, porosity 40%, softening temperature 251°C). Therefore, the basic composition of the insulating coating layer b, except for the softening-resistant layer, is the same as the composition shown in Fig. 1.

Insulating coating layer c:
The insulating coating layer c was obtained in the same manner as the insulating coating layer a except that the 25 µm thickness of polyester having through holes made in the thickness direction was replaced by a 90 µm thickness of polyester nonwoven fabric (softening-resistant layer: Eltas E01012 made by Asahi Kasei Fibers Corporation, softening temperature 255 °C). Therefore, the basic composition of the insulating coating layer c, except for the softening-resistant layer, is the same as the composition shown in Fig. 1.

Insulating coating layer d:
The insulating coating layer d is a resin sheet of 100 µm thickness made of maleic acid anhydride-modified polyethylene (Admer NE060 made by Mitsui Chemicals, Inc., density 0.92 g/cc, melt flow rate 1.0, softening temperature 104°C).

### [Preparation of sealed bag-like bodies for an evaluation test]

A polyamide sheet of 25 µm thickness was stuck by dry lamination onto one surface of an aluminum foil having a thickness of 40 µm, and the four kinds of thermoplastic resin sheets (1, 2, 3, 4) (insulation layer) shown below were each laminated on the other surface of the aluminum foil by thermal lamination. The laminate films thus obtained were used in a manner such that the above-mentioned polyamide sheet appeared on the outer layer side thereof. Thus, sealed bag-like bodies having an opening portion (sealing portion) at one side were prepared for evaluation test.

Thermoplastic resin sheet 1:
The thermoplastic resin sheet 1 was prepared by superposing, in the enumerated order, a 50 µm thickness of maleic acid anhydride-modified polyethylene (Thermal adhesive layer: density 0.92g/cc, melt flow rate 1.0, melting point 123°C), a 25 µm thickness of polyester including, in the thickness direction, through holes having a diameter of 1 mm φ and a porosity of 28 % (Softening-resistant layer: Lumirror S10 made by Toray Industries, Inc., softening temperature 253°C), and a 50 µm thickness of maleic acid anhydride-modified polyethylene (Thermal adhesive layer: density 0.92g/cc, melt flow rate 1.0, melting point 123°C), and moreover heat-laminating the superposed layers by a heating roller of 150 °C.

Figure 2 is a schematic sectional view conceptionally showing the above-mentioned laminate film in which the thermoplastic resin sheet 1 is stuck. In Fig. 2, numerals 21 and 23 are thermal adhesive layers consisting of maleic acid anhydride-modified polyethylene (corresponding to the thermal adhesive layer a, and the thermal adhesive layer b, respectively), numeral 22 is a softening-resistant layer consisting of polyester, numeral 22a is a through hole, numeral 29 is a polyamide layer, and numeral 28 is an aluminum foil.

At the time of heat lamination, the pressure applied by the heating roller causes melt maleic acid anhydride-modified polyethylene to enter from both of the upper and lower maleic acid anhydride-modified polyethylene layers 21 and 23 into through holes 22a as indicated by arrowed lines, and the melt maleic acid anhydride-modified polyethylene that has reached from the layers is fusion-bonded together inside the through holes 22a.

Also, as a result of the through holes 22a being filled with the maleic acid anhydride-modified polyethylene, the contact area between the softening-resistant layer 22 and the maleic acid anhydride-modified polyethylene layers 21 and 23 increases and accordingly the adhesive strength between the softening-resistant layer 22 and the maleic acid anhydride-modified polyethylene layers 21 and 23 increases. That is, the adhesive strength between the respective layers constituting the thermoplastic resin sheet 1 increases.

Thermoplastic resin sheet 2:
The thermoplastic resin sheet 2 was obtained in the same manner as the thermoplastic resin sheet 1 except that the 25 µm thickness of polyester having through holes made in the thickness direction was replaced by a 45 µm thickness of polyester mesh (softening-resistant layer: L315PW made by NBC Inc., wire diameter 30 µm, 315 meshes/ inch, porosity 40%, softening temperature 251°C). Therefore, the basic composition of the thermoplastic resin sheet 2, except for the softening-resistant layer, is the same as the composition shown in Fig. 2.

Thermoplastic resin sheet 3:
The thermoplastic resin sheet 3 was obtained in the same manner as the thermoplastic resin sheet 1 except that the 25 µm thickness of polyester having through holes made in the thickness direction was replaced by a 90 µm thickness of polyester nonwoven fabric (softening-resistant layer: Eltas E01012 made by Asahi Kasei Fibers Corporation, softening temperature 255 °C). Therefore, the basic composition of the thermoplastic resin sheet 3, except for the softening-resistant layer, is the same as the composition shown in Fig. 2.

Thermoplastic resin sheet 4:
The thermoplastic resin sheet 4 is a resin sheet of 100 µm thickness made of maleic acid anhydride-modified polyethylene (Admer NE060 made by Mitsui Chemicals, Inc., density 0.92 g/cc, melt flow rate 1.0, softening temperature 104°C).

### (Evaluation test method and the result)

The sealed bag-like bodies and the lead conductors having an insulating coating layer which were prepared as described above were used in the combinations shown in the Table 1 for making nonaqueous electrolyte cells; in each sealed bag-like body, the sealing portion through which each lead conductor having an insulating coating layer was pierced was heat-sealed under the conditions of 150 °C for one minute. Of the ten samples thus made, the number of samples in which short-circuit occurred is shown in the Table 1.

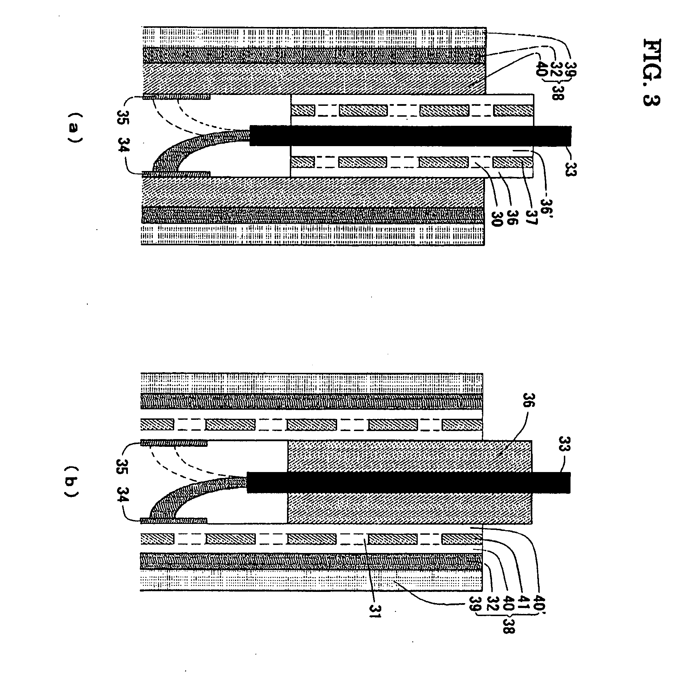

Figure 3, which is a sectional view showing the sealing portion and the vicinity of a nonaqueous electrolyte cell made in the Example, shows the state of sealing made at the sealing portion. Figure 3a is concerned with a nonaqueous electrolyte cell of Examples 1 to 3, and Fig. 3b is concerned with a nonaqueous electrolyte cell of Examples 4 to 6. In the figures, numeral 33 indicates two lead conductors (only one lead conductor is shown in the figures), which are connected with a cathode 34 and an anode 35, respectively. In the example of Fig. 3b, the lead conductor 33 is covered with only one layer of maleic acid anhydride-modified polyethylene layer 36 (thermal adhesive layer); however, in the example of Fig. 3a, the lead conductor 33 is covered with three layers: a maleic acid anhydride-modified polyethylene layer 36, a softening-resistant layer 37, and a maleic acid anhydride-modified polyethylene layer 36'. The softening-resistant layer 37 has through holes 30 in the thickness direction as shown in Fig. 1.

In Fig. 3, numeral 38 indicates a laminate film which constitutes a sealed bag-like body. This laminate film 38 has an aluminum foil 32 (metal layer) and a polyamide layer 39 which is laminated on the outer side of the aluminum foil 32 (the side opposite to the lead conductor 33). In the example of Fig. 3a, the aluminum foil 32 of the laminate film 38 is covered with only one layer of maleic acid anhydride-modified polyethylene layer 40 (thermal adhesive layer) on the side closer to the lead conductor 33, while in the example of Fig. 3b, the aluminum foil 32 of laminate film 38 is covered with three layers consisting of a maleic acid anhydride-modified polyethylene layer 40, a softening-resistant layer 41, and a maleic acid anhydride-modified polyethylene layer 40' on the side closer to the lead conductor 33. The softening-resistant layer 41 has through holes 31 in the thickness direction as shown in Fig. 2.

**Table 1**

| | Example 1 | Example 2 | Example 3 | Example 4 | Example 5 | Example 6 | Comparative example |
|---|---|---|---|---|---|---|---|
| Kind of insulating coating layer | a | b | c | d | d | d | d |
| Kind of thermoplastic resin sheet | 4 | 4 | 4 | 1 | 2 | 3 | 4 |
| Number of short-circuits | 0 | 0 | 0 | 0 | 0 | 0 | 8 |

As the results of the Table 1 show, the short circuit did not occur in the cases (Examples 1 to 6) where either the insulating coating layer of a lead conductor having an insulating coating layer or the thermoplastic resin sheet of a sealed bag-like body is provided in accordance with the present invention, that is, when a softening-resistant layer is provided. However, in the case (Comparative example) where no softening-resistant layer is provided for either the insulating coating layer or the thermoplastic resin sheet, there are many short circuits. Therefore, it is clearly shown that the softening-resistant layer prevents the occurrence of the short circuit. Furthermore, in the case of the above-mentioned experiment, the workability as well as the adhesive property of the sealing portion was very satisfactory.

The present patent application is based on Japanese patent application (Patent application 2006-0024342) filed on January 10, 2006, and the contents thereof are incorporated herein by reference

### Industrial applicability

In an electrical part, a nonaqueous electrolyte cell, a lead conductor having an insulating coating layer, and a sealed bag-like body which are set forth in claims 1 to 9 of the present invention, the short circuit which otherwise might easily occur between the lead conductor and the metal layer of the sealed bag-like body at the time of heat sealing can effectively be restrained, because a softening-resistant layer consisting of resin whose softening temperature is higher than the temperature of fusion-bonding is provided at the sealing portion between the sealed bag-like body and the lead conductor. Moreover, since the softening-resistant layer has through holes made in the thickness direction, the resin of the thermal adhesive layer enters into the through holes at the time of heat sealing or the like, which results in excellent adhesive strength and sealing effect, exhibiting peculiar effect such as preventing the exfoliation problem, or the like. Therefore, the industrial applicability of the present invention is significantly great.

## Claims

1. An electrical part comprising a lead conductor and a bag-like body which includes a metal layer and which is sealed at a sealing portion, the lead conductor extending from the inside of the bag-like body to the outside through the sealing portion, wherein the lead conductor and the bag-like body are fusion-bonded through a thermal adhesive layer at the sealing portion, and wherein a softening-resistant layer having through holes made in the thickness direction is provided between the lead conductor and the metal layer at the sealing portion, material of said thermal adhesive layer penetrating through said through holes.

2. A nonaqueous electrolyte cell comprising: a bag-like body, which includes a metal layer and which is sealed at a sealing portion; a lead conductor extending to the outside from the inside the bag-like body; a nonaqueous electrolyte enclosed inside the sealed vessel; and an electrode enclosed inside the bag-like body and connected with an end of the lead conductor; wherein the lead conductor and the bag-like body are fusion-bonded through a thermal adhesive layer at the sealing portion, and wherein a softening-resistant layer having through holes made in the thickness direction is provided between the lead conductor and the metal layer at the sealing portion, material of said thermal adhesive layer penetrating through said through holes.

3. A lead conductor having an insulating coating layer, the lead conductor being capable of use for the electrical part of claim 1 or the nonaqueous electrolyte cell of claim 2, wherein the insulating coating layer covers the lead conductor at least at the portion corresponding to the sealing portion, and wherein the insulating coating layer comprises at least the following two layers: a thermal adhesive layer covering the lead conductor; and a softening-resistant layer covering the thermal adhesive layer and having through holes made in the thickness direction, whereby, on heat lamination of the layers, material of said thermal adhesive layer enters into said through holes.

4. A lead conductor having an insulating coating layer according to claim 3, wherein the insulating coating layer further comprises a further thermal adhesive layer covering the softening-resistant layer.

5. A lead conductor having an insulating coating layer according to claim 3 or 4, wherein the softening-resistant layer is a mesh layer made of resin fibers.

6. A lead conductor having an insulating coating layer according to claim 3 or 4, wherein the softening-resistant layer is a nonwoven fabric layer made of resin fibers.

7. A bag-like body including a metal layer, the sealed bag-like body being suitable for use in an electrical part of claim 1 or a nonaqueous electrolyte cell of claim 2, wherein at least a portion to be fusion-bonded with the lead conductor is covered with an insulation layer having a thermal adhesive layer and a softening-resistant layer including through holes made in the thickness direction, and wherein the softening-resistant layer covers the thermal adhesive layer and the thermal adhesive layer covers the metal layer, whereby, on heat lamination of the layers, material of said thermal adhesive layer enters into said through holes.

8. A sealed bag-like body according to claim 7, wherein the softening-resistant layer is a mesh layer made of resin fibers.

9. A sealed bag-like body according to claim 7, wherein the softening-resistant layer is a nonwoven fabric layer made of resin fibers.

## Patentansprüche

1. Elektrisches Teil, das einen Anschlussleiter und einen taschenförmigen Körper umfasst, der eine Metallschicht enthält und der an einem Dichtungsabschnitt abgedichtet ist, wobei sich der Anschlussleiter vom Innenbereich des taschenförmigen Körpers durch den Dichtungsabschnitt nach außen erstreckt, bei dem
der Anschlussleiter und der taschenförmige Körper über eine thermische Haftvermittlerschicht an dem Dichtungsabschnitt schmelzverbunden sind und bei dem eine Erweichungswiderstandsschicht, die in der Dickenrichtung gefertigte Durchgangsöffnungen aufweist, zwischen dem Anschlussleiter und der Metallschicht an dem Dichtungsabschnitt vorgesehen ist, wobei Material von der thermischen Haftvermittlerschicht durch die Durchgangsöffnungen tritt.

2. Nicht-wässrige Elektrolytzelle, die umfasst:
einen taschenförmigen Körper, der eine Metallschicht enthält und der an einem Dichtungsabschnitt abgedichtet ist;
einen Anschlussleiter, der sich vom Innenbereich des taschenförmigen Körpers nach außen erstreckt;
ein nicht-wässriges Elektrolyt, das in dem abgedichteten Gefäß eingeschlossen ist; und
eine Elektrode, die in dem taschenförmigen Körper umschlossen ist und mit einem Ende des Anschlussleiters verbunden ist;
bei welcher der Anschlussleiter und der taschenförmige Körper über eine thermische Haftvermittlerschicht an dem Dichtungsabschnitt schmelzverbunden sind und bei welcher eine Erweichungswiderstandsschicht, welche in der Dickenrichtung gefertigte Durchgangsöffnungen aufweist, zwischen dem Anschlussleiter und der Metallschicht an dem Dichtungsabschnitt vorgesehen ist, wobei Material von der thermischen Haftvermittlerschicht durch die Durchgangsöffnungen dringt.

3. Anschlussleiter, der eine Isolierbeschichtung aufweist, wobei der Anschlussleiter für eine Verwendung für das elektrische Teil nach Anspruch 1 oder die nicht-wässrige Elektrolytzelle nach Anspruch 2 geeignet ist, bei dem die Isolierbeschichtung den Anschlussleiter wenigstens an dem Abschnitt abdeckt, der dem Dichtungsabschnitt entspricht, und bei dem die Isolierbeschichtung wenigstens die folgenden zwei Schichten umfasst:
eine thermische Haftvermittlerschicht, welche den Anschlussleiter abdeckt; und
eine Erweichungswiderstandsschicht, welche die thermische Haftvermittlerschicht abdeckt und
Durchgangsöffnungen aufweist, die in der Dickenrichtung gefertigt sind, wodurch bei einer Wärmebeschichtung der Schichten, Material der thermischen Haftvermittlerschicht in die Durchgangsöffnungen eintritt.

4. Anschlussleiter, der eine Isolierbeschichtung aufweist, nach Anspruch 3, bei dem die Isolierbeschichtung ferner eine weitere thermische Haftvermittlerschicht umfasst, welche die Erweichungswiderstandsschicht abdeckt.

5. Anschlussleiter, der eine Isolierbeschichtung aufweist, nach Anspruch 3 oder 4, bei dem die Erweichungswiderstandsschicht eine netzförmige Schicht ist, die aus Harzfasern gefertigt ist.

6. Anschlussleiter, der eine Isolierbeschichtung aufweist, nach Anspruch 3 oder 4, bei dem die Erweichungswiderstandsschicht eine Vliesstoffschicht ist, die aus Harzfasern gefertigt ist.

7. Taschenförmiger Körper, der eine Metallschicht enthält, wobei der abgedichtete taschenförmige Körper zur Verwendung in einem elektrischen Teil nach Anspruch 1 oder einer nichtwässrigen Elektrolytzelle nach Anspruch 2 geeignet ist, bei dem wenigstens ein Abschnitt, der mit dem Anschlussleiter schmelz-zu-verbinden ist, mit einer Isolierschicht abgedeckt ist, welche eine thermische Haftvermittlerschicht und eine Erweichungswiderstandsschicht aufweist, die in der Dickenrichtung gefertigte Durchgangsöffnungen enthält, und bei dem die Erweichungswiderstandsschicht die thermische Haftvermittlerschicht abdeckt und die thermische Haftvermittlerschicht die Metallschicht abdeckt, wodurch beim Wärmebeschichten der Schichten, Material der thermischen Haftvermittlerschicht in die Durchgangsöffnungen eintritt.

8. Abgedichteter taschenförmiger Körper nach Anspruch 7, bei dem die Erweichungswiderstandsschicht eine netzförmige Schicht ist, die aus Harzfasern gefertigt ist.

9. Abgedichteter taschenförmiger Körper nach Anspruch 7, bei dem die Erweichungswiderstandsschicht eine Vliesstoffschicht ist, die aus Harzfasern gefertigt ist.

## Revendications

1. Partie électrique comportant un conducteur électrique et un réservoir qui comprend une couche métallique et qui est scellé en une partie d'étanchéité, le conducteur électrique s'étendant depuis l'intérieur du réservoir vers l'extérieur par l'intermédiaire de la partie d'étanchéité, dans lequel le conducteur électrique et le réservoir sont reliés par fusion par l'intermédiaire d'une couche thermocollante dans la partie d'étanchéité, et dans lequel une couche résistant au ramollissement possédant des trous traversants réalisés dans la direction de l'épaisseur est prévue entre le conducteur électrique et la couche métallique dans la partie d'étanchéité, le matériau de ladite couche thermocollante pénétrant à travers lesdits trous traversants.

2. Cellule électrolytique non aqueuse comportant : un réservoir, qui comprend une couche métallique et qui est scellé en une partie d'étanchéité ; un conducteur électrique s'étendant vers l'extérieur depuis l'intérieur du réservoir; un électrolyte non aqueux compris à l'intérieur du réservoir scellé ; et une électrode comprise à l'intérieur du réservoir et reliée à une extrémité du conducteur électrique; dans laquelle le conducteur électrique et le réservoir sont reliés par fusion par l'intermédiaire d'une couche thermocollante dans la partie d'étanchéité, et dans laquelle une couche résistant au ramollissement possédant des trous traversants réalisés dans la direction de l'épaisseur est prévue entre le conducteur électrique et la couche métallique dans la partie d'étanchéité, le matériau de ladite couche thermocollante pénétrant par l'intermédiaire desdits trous traversants.

3. Conducteur électrique possédant une couche de revêtement isolante, le conducteur électrique pouvant être utilisé pour la partie électrique selon la revendication 1 ou la cellule électrolytique non aqueuse selon la revendication 2, dans lequel la couche de revêtement isolante recouvre le conducteur électrique au moins dans la partie correspondant à la partie d'étanchéité, et dans lequel la couche de revêtement isolante comporte au moins les deux couches suivantes : une couche thermocollante recouvrant le conducteur électrique ; et une couche résistant au ramollissement recouvrant la couche thermocollante et possédant des trous traversants réalisés dans la direction de l'épaisseur, moyennant quoi, lors d'un laminage à chaud des couches, le matériau de ladite couche thermocollante pénètre dans lesdits trous traversants.

4. Conducteur électrique possédant une couche de revêtement isolante selon la revendication 3, dans lequel la couche de revêtement isolante comporte en outre une autre couche thermocollante recouvrant la couche résistant au ramollissement.

5. Conducteur électrique possédant une couche de revêtement isolante selon la revendication 3 ou 4, dans lequel la couche résistant au ramollissement est une couche de maillage réalisée en fibres en résine.

6. Conducteur électrique possédant une couche de revêtement isolante selon la revendication 3 ou 4, dans lequel la couche résistant au ramollissement est une couche de tissu non tissé réalisé en fibres en résine.

7. Réservoir comprenant une couche métallique, le réservoir étant approprié pour être utilisé dans une partie électrique selon la revendication 1 ou une cellule électrolytique non aqueuse selon la revendication 2, dans lequel au moins une partie devant être reliée par fusion au conducteur électrique est recouverte d'une couche isolante possédant une couche thermocollante et une couche résistant au ramollissement comprenant des trous traversants réalisés dans la direction de l'épaisseur, et dans lequel la couche résistant au ramollissement recouvre la couche thermocollante et la couche thermocollante recouvre la couche métallique, moyennant quoi, lors d'un laminage à chaud des couches, le matériau de ladite couche thermocollante pénètre dans lesdits trous traversants.

8. Réservoir scellé selon la revendication 7, dans lequel la couche résistant au ramollissement est une couche de maillage réalisée en fibres en résine.

9. Réservoir scellé selon la revendication 7, dans lequel la couche résistant au ramollissement est une couche de tissu non tissé réalisée en fibres en résine.
